# EUROPÄISCHE PATENTSCHRIFT

(11) **EP 3 535 117 B1**
(45) Veröffentlichungstag und Bekanntmachung des Hinweises auf die Patenterteilung: **27.07.2022**
(21) Anmeldenummer: 17816405.9
(22) Anmeldetag: 01.11.2017
(51) Int. Cl.: B32B 5/02, B32B 5/14, B32B 5/18, B32B 5/20, B32B 5/24, B32B 3/30, B32B 3/26, D04H 1/68, B32B 5/32, B32B 5/08, B32B 7/02

(54) **ABSORPTIVES-SCHALLISOLATIONSELEMENT-HERSTELLUNGSVERFAHREN SOWIE ABSORPTIVES SCHALLISOLATIONSKRAFTFAHRZEUGVERKLEIDUNGSELEMENT**
ABSORBENT SOUND ISOLATION VEHICLE CLADDING ELEMENT AND MANUFACTURING METHOD THEREFOR
ÉLÉMENT D'ISOLATION ACOUSTIQUE À HAUTE ABSORPTION POUR VÉHICULE AUTOMOBILE ET PROCÉDÉ DE FABRICATION D'UN TEL ÉLÉMENT DE REVÊTEMENT

(30) Priorität: 04.11.2016 EP 16197260
(43) Veröffentlichungstag der Anmeldung: 11.09.2019
(73) Patentinhaber: Adler Pelzer Holding GmbH, 58099 Hagen (DE)
(72) Erfinder: SCHULZE, Volkmar, 84069 Schierling (DE); BECKER, Helmut, 44894 Bochum (DE); KURSCH, Volker, 45141 Essen (DE); TARELLO, Maurizio, 10014 Caluso (IT); NICOLAI, Norbert, 46514 Schermbeck-Gahlen (DE)
(74) Vertreter: Bittner, Bernhard
(86) Internationale Anmeldenummer: PCT/DE2017/100925
(87) Internationale Veröffentlichungsnummer: WO 2018/082743

(56) Entgegenhaltungen:
- EP-A1- 0 995 667
- EP-A1- 2 251 231
- DE-A1-102008 017 893
- DE-A1-102013 104 715
- JP-A- 2004 123 090

## Beschreibung

Die Erfindung betrifft ein absorptives Schallisolationskraftfahrzeugverkleidungselement-Herstellungsverfahren, welches im Weiteren näher erläutert wird, umfassend einen vierschichtigen Aufbau aus einer ersten Schaumschicht, einer zweiten Schaumschicht, einer Faservlies-Schaumschicht und einer Faservliesschicht.

Ferner betrifft die Erfindung ein absorptives Schallisolationskraftfahrzeugverkleidungselement, welches hier näher erläutert wird, wobei die Absorbtion des Schalls hier besonders hoch ist.

Aus dem **Stand der Technik** sind unterschiedliche Schallisolationselemente sowie dazugehörige Herstellungsverfahren bekannt, mittels denen insbesondere Strukturen geschaffen werden können, die entstehende Geräusche, beispielsweise im Motorraum, dämmen können, so dass Geräusche nicht oder nur wenig an die Umwelt oder in den Fahrgastraum eines Kraftfahrzeuges gelangen.

Im Stand der Technik sind sehr viele und unterschiedliche Zusammensetzungen von Schallisolationskraftfahrzeugverkleidungselementen sowie von Herstellungsverfahren dazu bekannt, die alle unterschiedliche Ansätze verfolgen und sich in kleinen aber elementaren Unterschieden differenzieren. Nachfolgend soll der relevante Stand der Technik aufgeführt werden.

Aus der Druckschrift DE 39 05 607 A1 ist eine Bodenverkleidung mit einem Schichtaufbau zur Herstellung einer Schallisolierung für Fahrzeuge bekannt, die aus einer akustisch wirksamen Schicht aus einem Schaum und wenigstens einem Vlies besteht, wobei wenigstens eine akustisch wirksame Schicht in Form einer Zwischenfolie eingebracht ist.

Aus der Druckschrift DE 10 2013 104 715 A 1 ist ein schalldämmendes Akustikelement bekannt, das wenigstens eine Schallabsorbervliesschicht, wobei diese Vliesschicht eine schaumflussregulierende oder schaumflusshemmende Schicht aufweist und eine Schallabsorberschaumschicht aufweist, wobei diese durch Hinterschäumen stoffschlüssig mit dem porösen Faservlies verbunden ist und diese Durchdringung bis zur schaumflussregulierenden bzw. -hemmenden Lage erfolgt.

Weiter ist aus der Druckschrift JP 2004 123090 A eine Bodenmatte für ein Auto zu entnehmen, wobei diese derart ausgebildet ist, sowohl eine Schalldämmleistung als auch eine Schallabsorptionsleistung zu erzielen. Hierbei sind eine Teppichschicht und zwei oder mehr Schichten von porösen Körperschichten kombiniert worden, wobei eine Verbundschicht, die ein Material umfasst, das die benachbarte poröse Körperschicht und ein Schaumharz bildet, zwischen den porösen Körperschichten vorgesehen ist.

Ferner ist aus der Druckschrift EP 2 251 231 A1 eine Licht-, Schallschutzplatte bekannt, die eine poröse Schicht aufweist und aus einer stabilen Faserstoffbahn aus thermoplastischer Faser besteht, die zwischen Schallabsorbern aus geschäumtem Kunststoff angeordnet ist, wobei das Material einer Stapelfaserbahn und das Schaummaterial eines weiteren Schallabsorbers eine oder mehrere Geräuschdämpfungsschichten bilden.

Zusammenfassend lässt sich festhalten, dass im Stand der Technik keine zwei unterschiedlichen Schaumsysteme mit unterschiedlichen Eigenschaften bekannt sind, die entsprechend im Weiteren wie diesseits weiter ausgeführt kombiniert werden oder kombinierbar sind.

Die **Probleme im Stand** der **Technik** sind im Wesentlichen, dass es derzeit nicht möglich ist, ein kostengünstiges hochabsorptives Schallisolationselement herzustellen, das folgende Anforderungen erfüllt:
- höhere Schallabsorbtion als mit den im Stand der Technik bekannten Schallisolations kraftfahrzeugverkleidungselementen;
- einfaches Herstellen und Reduktion der Einzelkomponenten, so dass eine Kostenreduktion während der Herstellung möglich ist, da bisher komplexe Systeme von wenigstens drei oder vier Einzelelementen notwendig waren, wobei diese Einzelelemente zunächst miteinander auf schwierige Art und Weise verknüpft werden mussten, wie beispielsweise das Einbringen einer Trennfolie in ein Vlies oder dergleichen;
sowie
- geringes Gewicht des Lagenaufbaus eines Schallisolationskraftfahrzeugverkleidungselements.

Im Allgemeinen können die im Stand der Technik beschriebenen Aufbauten durch einen Mehrlagenaufbau beschrieben werden, wobei hierbei stets sehr komplexe Verfahren und Schutzmechanismen von Nöten sind, so dass beim Hinterschäumen der eine Schaum nicht vollständig in eine Vliesschicht eindringt.

Es wurde insbesondere erkannt, dass bei im Stand der Technik befindlichen hochabsorptiven Schallisolationskraftfahrzeugverkleidungselementen allesamt nicht alle diese Anforderungen erfüllt werden können.

Der vorliegenden Erfindung liegt die **Aufgabe** zugrunde, ein günstiges und hochabsorptives Schallisolationselement sowie dazugehöriges Herstellungsverfahren aufzuzeigen, wobei eine sehr hohe akustische Wirksamkeit erzielt und entsprechend kostengünstig produziert werden soll, wobei die Einfachheit des Herstellungsvorganges durch Verwendung lediglich weniger Einzelzutaten im Vordergrund stehen, jedoch gleichzeitig die Effektivität erhöht und gesteigert werden soll.

**Gelöst** wird diese Aufgabe mit einem absorptiven Schallisolationskraftfahrzeugverkleidungselement-Herstellungsverfahren gemäß Hauptanspruch und einem absorptiven Schallisolationskraftfahrzeugverkleidungselement gemäß nebengeordnetem Anspruch. Das absorptives Schallisolationskraftfahrzeugverkleidungselement-Herstellungsverfahren umfassend einen vierschichtigen Aufbau aus einer ersten Schaumschicht, einer zweiten Schaumschicht, einer Faservlies-Schaumschicht und einer Faservliesschicht umfasst die Schritte:
I) Bereitstellen eines Faservlieses der Dicke d;
II) Komprimieren des Faservlieses auf eine komprimierte Dicke d';
III) Schäumen des zweiten Schaumes auf einer Oberseite der komprimierten Faservlieslage mittels einer ersten formgebenden Schaumformhälfte, wobei der zweite Schaum wenigstens teilweise in die Faservlieslage hineindiffundiert und eine Zwischenschicht, nämlich Schicht mit erhöhter Dichte ausbildet, wobei diese Zwischenschicht aus einer Teildicke der Faservliesschicht und dem zweiten Schaum besteht,
IV) Schäumen des ersten Schaumes auf der Faservlies-fernen Oberseite des zweiten Schaumes, wobei auf der zweiten-Schaum-fernen Seite des ersten Schaumes eine äußere Oberflächenstruktur auf dem ersten Schaum gebildet wird,
wobei beim Schäumen in Schritt III) und/oder IV) ein Ausbilden / Herstellen einer Rippen-, Blasen-, Aus- und/oder Einbuchtungsoberflächenstruktur auf der jeweiligen Faservlies-fernen Seite des jeweiligen Schaumes erfolgt, und die Schaumschichten unterschiedliche Dichten, Verlustfaktoren und/oder E-Module aufweisen und die Faservliesschicht ein Flächengewicht im Bereich von 400 g/m² bis 1800 g/m² und die Schicht mit erhöhter Dichte ein Flächengewicht im Bereich von 300 g/m² bis 1500 g/m² aufweist.

Als wesentlicher **Vorteil** hat sich gezeigt, dass beim Schäumen in Schritt III) und/oder IV) in der besonders bevorzugten Variante mit dem Ausbilden / Herstellen einer Rippen-, Blasen-, Aus- und/oder Einbuchtungsoberflächenstruktur auf der jeweiligen Faservlies-fernen Seite des jeweiligen Schaumes die unterschiedlichen Eigenschaften des ersten und des zweiten Schaumsystems überraschenderweise zu einer deutlich erhöhten Pegelreduktion durch das Erzeugnis führen, so dass zusätzlich erstmalig eine Schalldämpfung möglich ist. Zusätzlich zu der Schalldämpfung wird aber auch die Struktur des Bauteils aufgrund der unterschiedlichen Schäume in Kombination mit der hergestellten Oberflächenstruktur erhöht, so dass diese zwei Vorteile sich synergetisch entgegen den Erwartungen ergänzen. Durch das Komprimieren des Faservlieses zu Beginn wird das Faservlies derart vorbereitet, dass der zweite Schaum, der zunächst auf die Oberfläche des Faservlieses aufgebracht wird, lediglich nur teilweise und nicht vollständig in das Faservlies hineindiffundieren kann. Durch die Verwendung zweier Schaumstoffe mit unterschiedlichen Eigenschaften werden zudem die Anforderungen an verbesserte Schallabsorption und verringertes Gewicht erfüllt, wobei aber gleichzeitig die notwendige, zwar geringe, Bauteilfestigkeit gewährleistet ist. Insbesondere kann auf entsprechende Sperrschichten und Trennlagen verzichtet werden. Das Schäumen kann in Schritt III) in einem ersten Schaumwerkzeug erfolgen. Weiter kann das Schäumen in Schritt IV) in einem zweiten Schaumwerkzeug oder in dem ersten Schaumwerkzeug mit ausgewechselter oberer Schaumformhälfte erfolgen.

Wenn die Oberflächenstruktur des Schaumsystems des zweiten Schaums, insbesondere bei Ausgestaltung mit einer Rippenstruktur, der Oberflächenstruktur des ersten Schaums entspricht, dann kann das Schäumen sowohl des ersten als auch des zweiten Schaumsystems in demselben Schäumwerkzeug erfolgen. Man verändert beim Schäumen des ersten Schaumsystems nur das Spaltmaß; nämlich um die Dicke des ersten Schaumsystems. Dies stellt einen erheblichen Kostenvorteil dar, da nur ein Schäumwerkzeug benötigt wird.

Das hochabsorptive Schallisolationskraftfahrzeugverkleidungselement, hergestellt mit einem hier offenbarten und dargestellten hochabsorptiven Schallisolationskraftfahrzeugverkleidungselement-Herstellungsverfahren, weist einen vierlagigen Aufbau auf, wobei dieser Aufbau umfasst:
- eine erste Schaumschicht,
- eine zweite Schaumschicht,
- eine Schicht mit erhöhter Dichte und
- eine Faservliesschicht,
   wobei
- die Schaumschichten unterschiedliche Dichten, Verlustfaktoren und/oder E-Module aufweisen
   und
- der an die Faservliesschicht angrenzende Schaum in das Faservlies teilweise hineindiffundiert ist und die Schicht mit erhöhter Dichte bildet,
wobei die Oberfläche des ersten und/oder zweiten Schaumstoffes auf der Faservlies-fernen Oberseite der ersten und/oder zweiten Schaumschicht eine Rippen-, Blasen-, Aus- und/oder Einbuchtungsstruktur aufweist.

Das Faservlies besteht aus PET-Fasern oder das Faservlies besteht aus PET-Fasern und BiCo Fasern, wobei dann der Anteil von 1 bis 50 Gew.-% oder von 8 bis 20 Gew.-% oder 10 Gew.-% BiCo Fasern an dem Faservlies beträgt, oder des Weiteren kann das Faservlies
(a) synthetische Fasern umfassen, die ausgewählt sind aus der Gruppe umfassend Polyesterfasern, insbesondere Polyethylenterephthalatfasern, Polyamidfasern, insbesondere Nylon 6 und/oder Nylon 66, Polyolefinfasern, insbesondere Polypropylenfasern und/oder Polyethylenfasern und Acrylfasern sowie deren Fasergemische einschließlich Bikomponentenfasern und Multikomponentenfasern,
(b) Naturfasern umfassen, die ausgewählt sind aus der Gruppe umfassend Rohbaumwollfasern, Hanffasern, Cocosfasern, Kenaffasern, Jutefasern und Sisalfasern einschließlich deren Gemische
   oder
(c) Gemische der synthetischen Fasern der Gruppe (a) und (b) enthalten.

Weiterhin hat das Faservlies ein Flächengewicht von 400g/m² bis 1800 g/m², insbesondere 600 g/m² bis 1200 g/m² und die Schicht mit erhöhter Dichte liegt im Bereich von 300 g/m² bis 1500 g/m² und insbesondere ein Flächengewicht von 350 g/m² bis 800 g/m² aufweisen.

Diesbezüglich kann zusätzlich mit einer CO₂-Beladung des PUR-Schaumes gearbeitet werden. Die Beladung kann im Isozyanat oder im Polyol erfolgen, wobei auch beide beladen sein können. Des Weiteren besteht die Möglichkeit der Beladung im Mischkopf. Anstatt einer CO₂-Beladung kann auch Stickstoff, Pentan oder Druckluft verwendet werden. Bevorzugt kann die erste und/oder zweite Schaumschicht Blasenhohlräume enthalten.

Die Schaumsysteme sind in einer besonders bevorzugten Ausführungsvariante aus PUR. Das erste Schaumsystem kann eine Dichte von 40 bis 90 g/l, einen Verlustfaktor von 0,15 bis 0,26 und/oder einen E-Modul von 45 bis 180 kN/m² haben. Weiter kann das zweite Schaumsystem eine Dichte von 50 bis 150 g/l, einen Verlustfaktor von 0,15 bis 0,55 und/oder einen E-Modul von 20 bis 300 kN/m² haben.

Im Sinne dieser Offenbarung kann das absorptive Schallisolationskraftfahrzeugverkleidungselement 1, insbesondere durch dessen sehr hohe Absorptionsfähigkeit in Bezug auf dessen Schallisolation, als hochabsorptives Schallisolationskraftfahrzeugverkleidungselement 1 bzw. ein entsprechendes Schallisolationskraftfahrzeugverkleidungselement-Herstellungsverfahren bezeichnet werden.

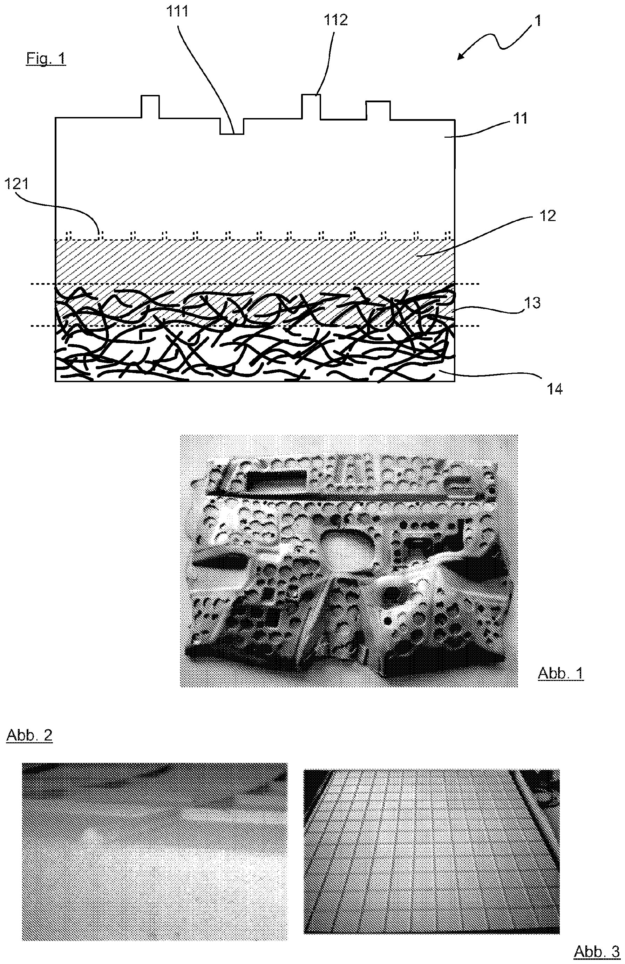

Nachfolgend werden Ausführungsbeispiele der Erfindung anhand der beiliegenden Zeichnung Fig. 1 und den Abbildungen Abb. 1 bis 5 in der **Figuren- und Abbildungsbeschreibung** detailliert beschrieben, wobei diese die Erfindung erläutern sollen und nicht beschränkend zu werten sind:
Es zeigen:
- Fig. 1: ein schematisches Ausführungsbeispiel des offenbarten absorptiven Schallisolationskraftfahrzeugverkleidungselement 1;
- Abb. 1: ein Ausführungsbeispiel der Oberflächenstruktur eines fertigen absorptiven Schallisolationskraftfahrzeugverkleidungselementes 1;
- Abb. 2: ein Ausführungsbeispiel der Rippenstruktur der Oberflächen des ersten Schaumes 11 in einer Nahansicht;
- Abb. 3: das Ausführungsbeispiel der Rippenstruktur der Oberfläche des ersten Schaumes 11 gemäß Abb. 2 in einer Draufsicht;
- Abb. 4: einen ersten Querschnitt zum Schichtaufbau eines exemplarisch hergestellten absorptiven Schallisolationskraftfahrzeugverkleidungselementes 1 und
- Abb. 5: einen zweiten Querschnitt zum Schichtaufbau eines exemplarisch hergestellten absorptiven Schallisolationskraftfahrzeugverkleidungselementes 1.

In Fig. 1 ist ein schematisches Ausführungsbeispiel des offenbarten absorptiven Schallisolationskraftfahrzeugverkleidungselements 1 dargestellt.

Dieses absorptive Schallisolationskraftfahrzeugverkleidungselements 1 weist einen vierlagigen Schichtaufbau 11, 12, 13, 14 auf. Die unterste Schicht ist eine reine Faservliesschicht 14. Darüber ist in dem Verbund eine Schicht mit erhöhter Dichte 13 ausgebildet, die gebildet wird aus einer Teildicke des Faservlieses 14 und dem darüber angeordneten zweiten Schaum 12, wobei der zweite Schaum 12 während der Herstellung in die Faservliesschicht 14 hineindiffundiert ist bzw. bewusst eingebracht wurde, wobei dieses Hineindiffundieren teilweise erfolgt, also nicht vollständig. Die oberste und damit vierte Schicht ist ein erster Schaum 11, der andere Eigenschaften aufweist als der zweite Schaum 12.

Weiter ist optional - hier gestrichelt dargestellt - eine auf der Oberfläche des zweiten Schaums 12 hergestellte Rippenstruktur 121 angeordnet (vgl. Abb. 3).

Die Oberfläche des ersten Schaums 11 weist Vertiefungen 111 und Erhöhungen 112 auf.

Die Oberflächenstruktur der Schaumsysteme 11 und 12 kann somit entweder gleich oder aber auch unterschiedlich ausgebildet sein bzw. werden.

In Abb. 1 ist ein Ausführungsbeispiel der Oberflächenstruktur eines fertigen absorptiven Schallisolationskraftfahrzeugverkleidungselementes 1 dargestellt.

Hierbei erkennt man notwendige Aussparungen und Ausbuchtungen sowie eine mit Ein-111 und Ausbuchtungen 112, in Ausführung von Vertiefungen 111 bzw. Erhöhungen 112 versehene Oberflächenstruktur.

Abb. 2 zeigt ein Ausführungsbeispiel der Rippenstruktur 121 der Oberflächen des ersten Schaumes 11 in einer Nahansicht.

Exemplarisch wurde hier eine Oberflächenstruktur erstellt, die Rippen 121 aufweist, die eine Höhe von ca. 8 mm und eine Breite von ca. 5 mm aufweisen. Diese Rippen 121 haben die Eigenschaft sowohl an der Oberfläche des ersten Schaumes 11 als auch an der Oberfläche des zweiten Schaumes 12, nämlich der Grenzschicht zwischen dem ersten Schaum 11 und dem zweiten Schaum 12, eine Geräuschdämpfung herbeizuführen, so dass beispielsweise Geräusche aus dem Motorraum, zusätzlich durch diese Eigenschaft gedämpft, in den Fahrgastraum gelangen.

Weiter zeigt **Abb. 3** das Ausführungsbeispiel der Rippenstruktur 121 der Oberfläche des ersten Schaumes 11 gemäß Abb. 2 in einer Draufsicht.

An dieser Stelle wird darauf hingewiesen, dass als Zwischenprodukt die Oberfläche des zweiten Schaums 12 vergleichbar, beispielsweise mit einer Rippenstruktur 121, ausgebildet sein kann, wobei der erste Schaum 11 im weiteren Prozess auf diese Oberfläche aufgebracht wird.

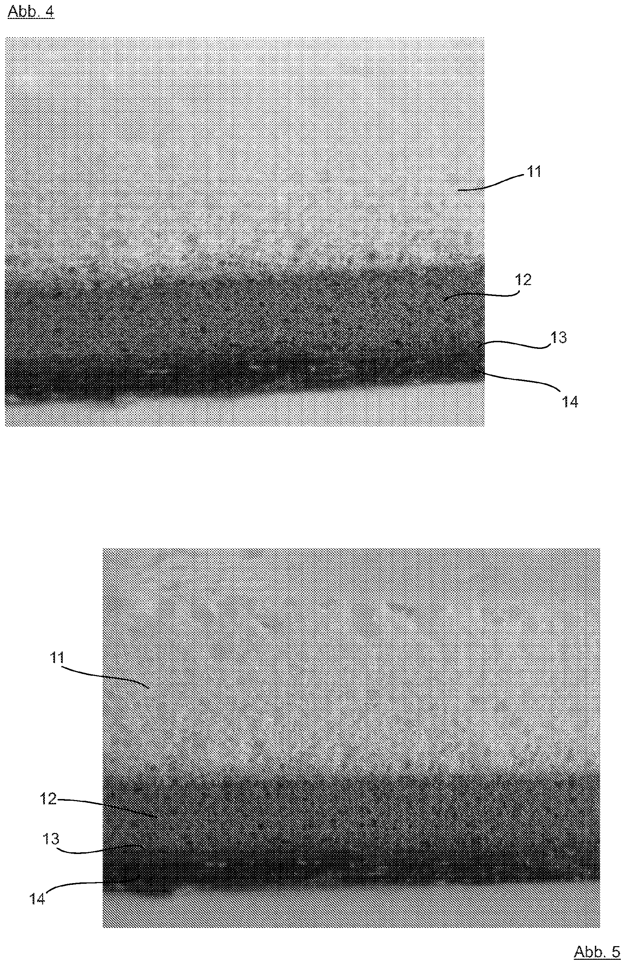

In **Abb. 4** ist ein erster Querschnitt zum Schichtaufbau eines exemplarisch hergestellten absorptiven Schallisolationskraftfahrzeugverkleidungselementes 1 gezeigt.

Das absorptive Schallisolationskraftfahrzeugverkleidungselement 1 besteht aus dem vierlagigen Schichtaufbau, der in dieser Abbildung gut zu erkennen ist, nämlich beginnend von unten als erstes eine Faservliesschicht 14, darüber eine Schicht mit erhöhter Dichte 13, die anteilig aus dem Faservlies 14 und dem zweiten Schaum 12, der in das Faservlies 14 teilweise hineindiffundiert ist, besteht, gefolgt von der tatsächlichen Schicht des zweiten Schaums 12 und der abschließenden obersten Schicht, nämlich dem ersten Schaum 11.

Dieses exemplarisch dargestellte Bauteil hat eine Gesamtdicke von 20 mm, wobei zunächst ein PET-Feinfaservlies mit 15 % BiCo-Fasern von einer ersten Dicke d = 25 mm auf eine reduzierte Dicke d' = 5 mm komprimiert bzw. formverpresst wurde. Im Anschluss wurde diese verpresste Vlieslage 14 in ein Schäumwerkzeug eingelegt und die Schäumform geschlossen, wobei nach erfolgter Abdichtung der Form auf der Vlieslage 14 ein Schäumen mittels des zweiten Schaumsystems 12, mit folgenden Eigenschaften Dichte 150 g/l, Verlustfaktor 0,34, E-Modul 85 kN/m², erfolgte. Hierbei wurde die Faservlieslage 14 mittels des zweiten Schaumes 12 hinterschäumt, wobei während des Hinterschäumens der zweite Schaum 12 in die Faservliesschicht 14 teilweise hineindiffundiert ist.

Nach einer Reaktionszeit von 50 s wurde die obere Schäumformhälfte ausgewechselt. Die neue Oberform hatte eine entsprechende definierte Rippenstruktur 121 mit den Eigenschaften 50 mm x 50 mm Rastermaß, eine Rippenhöhe von 8 mm sowie eine Rippenbreite von 5 mm.

Im Anschluss erfolgte das Schäumen mit dem ersten Schaumsystem 11 mit den Eigenschaften Dichte 75 g/l, einem Verlustfaktor 0,17 und einem E-Modul 45 kN/m², wobei der zweite Schaum 12 mit dem ersten Schaumsystem 11 hinterschäumt worden ist.

Nach einer Reaktionszeit von 60 s wurde die Schäumform erneut geöffnet und das Bauteil 1 herausgenommen und im Anschluss auf die gewünschte Endform gestanzt.

Während des Schäumens ist der Schaum des zweiten Schaumsystem 12 in die verpresste Faservlieslage teilweise hineindiffundiert und hat eine Schicht mit einem Flächengewicht von 500 g/m² gebildet, so dass sich diese Schicht 13 von der reinen Faservliesschicht 14 unterscheidet, da die Faservliesschicht 14 ein Flächengewicht von 800 g/m² aufwies.

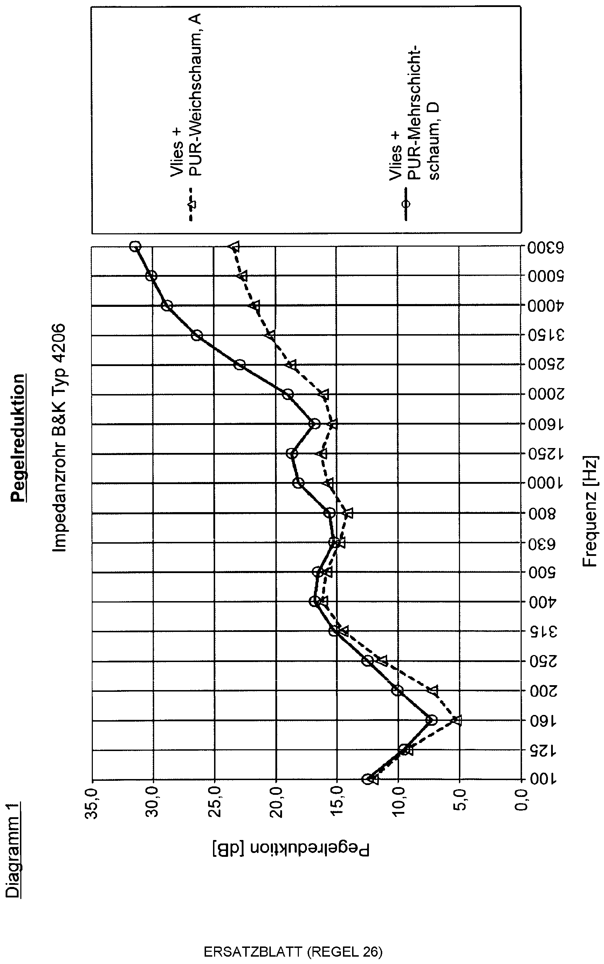

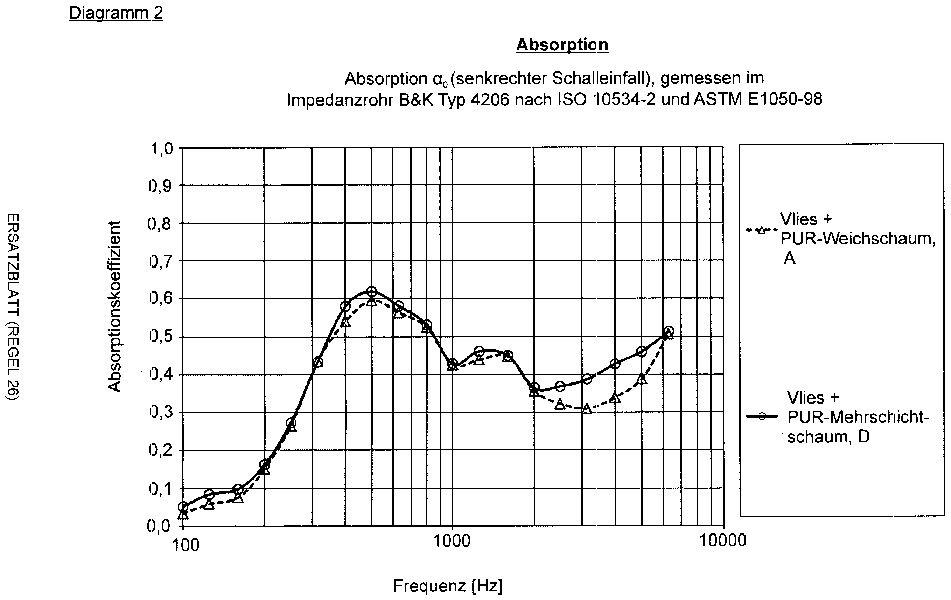

**Abb. 5** zeigt einen zweiten Querschnitt zum Schichtaufbau eines exemplarisch hergestellten absorptiven Schallisolationskraftfahrzeugverkleidungselementes 1.

Der offenbarte Schichtaufbau ist auch in diesem Querschnitt zu erkennen, wobei wieder die Schichten Faservlies 14, Schicht mit erhöhter Dichte 13, zweite Schaumschicht 12 und erste Schaumschicht 11 übereinander liegen.

Ferner sind in den anliegenden zwei Diagrammen entsprechende Messungen dargestellt, die weiter die Erfindung erläutern:

In **Diagramm 1** ist die Noise Reduction (Pegelreduktion) zweier Schaumsysteme dargestellt, wobei hierbei ein im Stand der Technik bekanntes System aus Vlies und PUR-Weichschaum, A einem erfindungsgemäßen Vlies und PUR-Mehrschichtschaum, D gegenübergestellt ist.

Hierbei ist eine deutlich erhöhte Pegelreduktion des erfindungsgemäßen Verkleidungselementes (D) gegenüber einem einfach hinterschäumten Vlies (A) des Standes der Technik zu erkennen.

Weiter ist in **Diagramm** 2 die Absorption beider aus dem Diagramm 1 bekannten Verkleidungselemente dargestellt, wobei hierbei die unterschiedlichen Verhalten der beiden Systeme (A und D) erkennbar sind.

### Bezugszeichenliste

- 1: absorptives Schallisolationskraftfahrzeugverkleidungselement
- 11: erster Schaum
- 111: Vertiefungen
- 112: Erhöhungen
- 12: zweiter Schaum
- 121: Rippen
- 13: Faservliesschicht mit erhöhter Dichte
- 14: Faservlies

## Patentansprüche

1. Absorptives Schallisolationskraftfahrzeugverkleidungselement-Herstellungsverfahren umfassend einen vierschichtigen Aufbau aus einer ersten Schaumschicht (11), einer zweiten Schaumschicht (12), einer Faservlies-Schaumschicht (13) und einer Faservliesschicht (14) umfassend die Schritte:
I) Bereitstellen einer Faservliesschicht (14) der Dicke d;
II) Komprimieren der Faservliesschicht (14) auf eine komprimierte Dicke d';
III) Schäumen des zweiten Schaumes (12) auf einer Oberseite der komprimierten Faservliesschicht (14) mittels einer ersten formgebenden Schaumformhälfte, wobei der zweite Schaum (12) wenigstens teilweise in die Faservliesschicht (14) hineindiffundiert und eine Zwischenschicht, nämlich Schicht mit erhöhter Dichte (13) ausbildet, wobei diese Zwischenschicht (13) aus einer Teildicke der Faservliesschicht (14) und dem zweiten Schaum (12)
besteht,
IV) Schäumen des ersten Schaumes (11) auf der Faservliesschicht-fernen Oberseite des zweiten Schaumes (12), wobei auf der zweiten Schaum-fernen Seite des ersten Schaumes (11) eine äußere Oberflächenstruktur auf dem ersten Schaum (11) gebildet wird; wobei
Beim Schäumen in Schritt III) und/oder IV) ein Ausbilden / Herstellen einer Rippen-, Blasen-, Aus- und/oder Einbuchtungsoberflächenstruktur auf der jeweiligen Faservliesschicht-fernen Seite des jeweiligen Schaumes (11, 12) erfolgt, und
die Schaumschichten (11, 12) unterschiedliche Dichten, Verlustfaktoren und/oder E-Module aufweisen und
die Faservliesschicht (14) ein Flächengewicht im Bereich von 400 g/m² bis 1800 g/m² und
die Schicht mit erhöhter Dichte (13) ein Flächengewicht im Bereich von 300 g/m² bis 1500 g/m²aufweist.

2. Absorptives Schallisolationskraftfahrzeugverkleidungselement-Herstellungsverfahren nach Anspruch 1,
**dadurch gekennzeichnet, dass**
das Schäumen in Schritt III) in einem ersten Schaumwerkzeug erfolgt.

3. Absorptives Schallisolationskraftfahrzeugverkleidungselement-Herstellungsverfahren nach Anspruch 1 oder 2,
**dadurch gekennzeichnet, dass**
das Schäumen in Schritt IV) in einem zweiten Schaumwerkzeug oder in dem ersten Schaumwerkzeug mit ausgewechselter oder gleichbehaltener oberer Schaumformhälfte erfolgt.

4. Hochabsorptives Schallisolationskraftfahrzeugverkleidungselement (1) hergestellt mit dem Verfahren nach Anspruch 1,
**dadurch gekennzeichnet, dass**
die Faservliesschicht aus PET Fasern besteht;
oder
die Faservliesschicht aus PET Fasern besteht und BiCo Fasern enthält, wobei der Anteil von 1 bis 50 Gew.-% beträgt;
oder
die Faservliesschicht synthetische Fasern umfasst, die ausgewählt sind aus der Gruppe a),
nämlich Polyesterfasern, Polyethylenterephthalatfasern, Polyamidfasern, Nylon 6, Nylon 66, Polyolefinfasern, Polypropylenfasern, Polyethylenfasern, und/oder Acrylfasern, sowie deren Fasergemische einschließlich Bikomponentenfasern und
Multikomponentenfasern;
oder
die Faservliesschicht Naturfasern umfasst, die ausgewählt sind aus der Gruppe b), nämlich Rohbaumwollfasern, Hanffasern, Cocosfasern, Kenaffasern, Jutefasern und/oder Sisalfasern einschließlich deren Gemische;
oder
die Faservliesschicht Gemische der synthetischen Fasern der Gruppe a) und b) enthält.

5. Hochabsorptives Schallisolationskraftfahrzeugverkleidungselement (1) nach Anspruch 4, **dadurch gekennzeichnet, dass**
die erste (11) und/oder zweite Schaumschicht (12) Blasenhohlräume enthält.

6. Hochabsorptives Schallisolationskraftfahrzeugverkleidungselement (1) nach Anspruch 4, **dadurch gekennzeichnet, dass**
das erste und/oder das zweite Schaumsystem (11, 12) mit CO2 beladen ist.

## Claims

1. A method for producing an absorbing sound insulation motor vehicle trim element comprising a four-layer structure made from a first foam layer (11), a second foam layer (12), a non-woven foam layer (13), and a non-woven fabric layer (14) includes the steps of:
I) providing a non-woven fabric layer (14) having the thickness d;
II) compressing the non-woven fabric layer (14) to a compressed thickness d';
III) foaming the second foam (12) on a top surface of said compressed non-woven fabric layer (14) by means of a first shaping foam half mold, wherein said second foam (12) will diffuse into said non-woven fabric layer (14) at least partially to form an intermediate layer, namely a layer with increased density (13), wherein said intermediate layer (13) consisting of a partial thickness of the non-woven fabric layer (14) and the second foam (12);
IV) foaming the first foam (11) on the top surface of the second foam (12) remote from the non-woven fabric, wherein an outer surface structure is formed on the first foam (11) on the surface of the first foam (11) remote from the second foam; wherein
during the foaming in step III) and/or IV), the formation/preparation of a rib, blister, projection and/or indentation surface structure is effected on the side of the respective foam (11, 12) remote from the respective non-woven fabric; and
wherein the foam layers (11, 12) have different densities, loss factors and/or modules of elasticity; and
the non-woven fabric layer (14) has a mass per unit area from 400 g/m2 to 1800 g/m2, and
the layer with increased density (13) has a mass per unit area from 300 g/m2 to 1500 g/m2.

2. The method for producing an absorbing sound insulation motor vehicle trim element according to claim 1,
**characterized in that**
the foaming in step III) is effected in a first foaming mold.

3. The method for producing an absorbing sound insulation motor vehicle trim element according to claim 1 or 2,
**characterized in that**
the foaming in step IV) is effected in a second foaming mold, or in the first foaming mold in which the upper half of the foaming mold has been replaced or maintained.

4. Highly absorbing sound insulation motor vehicle trim element produced with the method according to claim 1,
**characterized in that**
the non-woven fabric layer consists of PET fibers and contains BiCo fibers, wherein the proportion thereof is from 1 to 50%;
or
the non-woven fabric layer includes synthetic fibers selected from the group a),
i.e., polyester fibers, polyethyleneterephthalate fibers, polyamide fibers, nylon 6, nylon 66, polyolefin fibers, polypropylene fibers, polyethylene fibers, and/or acrylic fibers, as well as fiber mixtures thereof including bicomponent fibers and multicomponent fibers;
or
the non-woven fabric layer includes natural fibers selected from the group b),
i.e., raw cotton fibers, hemp fibers, coconut fibers, kenaf fibers, jute fibers, and/or sisal fibers including mixtures thereof;
or
the non-woven fabric layer contains mixtures of the synthetic fibers of group a) and b).

5. Highly absorbing sound insulation motor vehicle trim element according to claim 4,
**characterized in that**
the first (11) and/or the second foam layer(12) contains bubble voids.

6. Highly absorbing sound insulation motor vehicle trim element according to claim 4,
**characterized in that**
the first and/or the second foaming system (11, 12) is loaded with CO2.

## Revendications

1. Procédé de fabrication d'un élément de revêtement d'isolation acoustique pour véhicule à absorption comprenant une structure à quatre couches constituée d'une première couche de mousse (11), d'une deuxième couche de mousse (12), d'une couche de mousse - voile de fibres (13) et d'une couche de voile de fibres (14), ledit procédé comprenant les étapes consistant à :
I) fournir une couche de voile de fibres (14) d'épaisseur d ;
II) comprimer la couche de voile de fibres (14) sur une épaisseur comprimée d' ;
III) mousser la deuxième mousse (12) sur une face supérieure de la couche de voile de fibres comprimée (14) au moyen d'une première moitié de moule de moussage mettant en forme, la deuxième mousse (12) étant introduite par diffusion au moins partiellement à l'intérieur de la couche de voile de fibres (14) et formant une couche intermédiaire, à savoir la couche ayant une épaisseur accrue (13), ladite couche intermédiaire (13) se composant d'une épaisseur partielle de la couche de voile de fibres (14) et de la deuxième mousse (12),
IV) mousser la première mousse (11) sur la face supérieure de la deuxième mousse (12), éloignée de la couche de voile de fibres, une structure superficielle extérieure sur la première mousse (11) étant formée sur la face de la première mousse (11) éloignée de la deuxième mousse ;
une formation / création d'une structure superficielle de nervures, de bulles, de renflements et/ou d'échancrures se produisant sur la face respective de la mousse (11, 12) respective, éloignée de la couche de voile de fibres, lors du moussage à l'étape III) et/ou IV), et
les couches de mousse (11, 12) présentant des épaisseurs, facteurs de perte et/ou modules E différents et
la couche de voile de fibres (14) présentant un grammage situé dans la plage de 400 g/m² à 1800 g/m² et
la couche ayant une épaisseur accrue (13) présentant un grammage situé dans la plage de 300 g/m² à 1500 g/m².

2. Procédé de fabrication d'un élément de revêtement d'isolation acoustique pour véhicule à absorption selon la revendication 1, **caractérisé en ce que**
le moussage à l'étape III) s'effectue dans un premier outil de moussage.

3. Procédé de fabrication d'un élément de revêtement d'isolation acoustique pour véhicule à absorption selon la revendication 1 ou 2, **caractérisé en ce que**
le moussage à l'étape IV) s'effectue dans un deuxième outil de moussage ou dans le premier outil de moussage ayant une moitié supérieure de moule de moussage remplacée ou identique.

4. Élément de revêtement d'isolation acoustique pour véhicule à haute absorption (1) fabriqué par le procédé selon la revendication 1, **caractérisé en ce que**
la couche de voile de fibres se compose de fibres de PET ;
ou
la couche de voile de fibres se compose de fibres de PET et contient des fibres de BiCo, la proportion allant de 1 à 50 % en poids ;
ou
la couche de voile de fibres comprend des fibres synthétiques choisies dans le groupe a),
à savoir des fibres de polyester, des fibres de polyéthylène téréphtalate, des fibres de polyamide, du nylon 6, du nylon 66, des fibres de polyoléfine, des fibres de polypropylène, des fibres de polyéthylène, et/ou des fibres acryliques, ainsi que leurs mélanges de fibres, y compris des fibres bicomposants et des fibres multicomposants ;
ou
la couche de voile de fibres comprend des fibres naturelles, choisies dans le groupe b),
à savoir parmi des fibres de coton brut, des fibres de chanvre, des fibres de coco, des fibres de kénaf, des fibres de jute et/ou des fibres de sisal, y compris leurs mélanges ;
ou
la couche de voile de fibres contient des mélanges de fibres synthétiques des groupes a) et b).

5. Élément de revêtement d'isolation acoustique pour véhicule à haute absorption (1) selon la revendication 4,
**caractérisé en ce que**
la première (11) et/ou la deuxième couche de mousse (12) contient des espaces creux de type bulles.

6. Élément de revêtement d'isolation acoustique pour véhicule à haute absorption (1) selon la revendication 4,
**caractérisé en ce que**
le premier et/ou le deuxième système de mousse (11, 12) est chargé de CO₂.
